(19) Europäisches Patentamt
European Patent Office
Office européen des brevets

(11) **EP 4 036 423 A1**

(12) **EUROPEAN PATENT APPLICATION**

(43) Date of publication:
**03.08.2022   Bulletin 2022/31**

(21) Application number: **21154434.1**

(22) Date of filing: **29.01.2021**

(51) International Patent Classification (IPC):
**F16B 2/22** (2006.01)       **F16B 7/04** (2006.01)
**F16B 9/00** (2006.01)       **E04B 1/26** (2006.01)

(52) Cooperative Patent Classification (CPC):
**F16B 2/22; E04B 1/2604; F16B 7/042;**
**F16B 7/0473; F16B 9/05;** E04B 2001/1918;
E04B 2001/1945; E04B 2001/1966;
E04B 2001/2628; E04B 2001/2668;
E04B 2001/2676; E04B 2001/2692; F16B 2200/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **ECOLE POLYTECHNIQUE FEDERALE DE
LAUSANNE
(EPFL)
1015 Lausanne (CH)**

• **Vrije Universiteit Brussel
1050 Brussel (BE)**

(72) Inventors:
• **VAN WASSENHOVE, Romain
1170 Brussels (BE)**
• **VASSILOPOULOS, Anastasios
1022 CHAVANNES-RENENS (CH)**
• **DE LAET, Lars
1560 Hoeilaart (BE)**

(74) Representative: **Grosfillier, Philippe
André Roland SA
P.O Box 352
1000 Lausanne 22 (CH)**

(54) **CLIP CONNECTOR DEVICE AND USES THEREOF**

(57)      A removable clip connection device (10) particularly adapted to bamboo structures is disclosed, as well as assemblies formed with the same and uses thereof. The clip connection features a base (100) located at a first end of the device, said base having a first surface (101) and a second surface (102); at least a pair of face-to-face branches (201,202), each branch in a pair stemming from the first surface of said base; and a blocking button (301,302) located at the extremity of each branch, defining an opposed second end of the device, wherein each branch in a pair is directed outwardly one with respect to the other so to be elastically pre-tensioned.

**Fig. 1**

## Description

## Technical Field

The invention is in the field of devices for construction and in particular to a removable clip connection device particularly adapted to bamboo structures.

## Background Art

In 2017, the building sector was responsible for 39% of energy-related carbon dioxide ($CO_2$) emissions, from which 11% are directly related to the construction industry.

After several decades of quasi-monopoly of steel and concrete structures in European countries, designers are getting aware of the negative environmental consequences of these choices, looking for solutions which could reduce the impact of designs on the environment without altering their quality, and wood is being reconsidered, as it is a more sustainable structural material. In fact, in its cycle, wood grows absorbing the carbon in the $CO_2$ of the atmosphere and releases it in the atmosphere during its degradation. The use of wood in buildings -as any other natural material-could thus be seen as a storage of the carbon it contains, at the condition that the production of wood is conducted on a sustainable way, cutting no more wood in a forest than can grow. This condition may be difficult to respect if the use of wood as a building material continues to increase, especially in the Western part of the world, where only a small surface of forest is left.

Bamboo offers better mechanical properties than wood (e.g. better strength than almost all softwoods and comparable to hardwoods) and a natural circular hollow section fitted for structural use. Moreover, it can be harvested on average after 3-5 years compared to 20-40 for timber. This means that, on the same land surface, a larger quantity of bamboo than wood could be produced per year: 78.3 ton/(ha*year) for the bamboo compared to 17.5 ton/(ha*year) for timber. The possibility to use bamboo without transformation is one of the main reasons why bamboo is a more sustainable material than steel, concrete and wood. The energy needed if the bamboo is used in its natural form is then only that needed for the harvesting, preservation process and transportation. Therefore, if the bamboo is produced locally and in a durable way, it is a very sustainable solution.

The use of raw bamboo as a structural element could thus help to decrease the ecological footprint of buildings, as well as other kind of buildable structures. Bamboo culms have a circular hollow section which is structurally efficient, because the mass is disposed at the exterior of the section, increasing the moment of inertia of the section, and therefore increasing the bending resistance of the culm.

Traditional bamboo buildings usually use leashed connections. This technique, although avoiding making holes in the bamboo, and therefore decreasing the risk of failure, leads to a non-stiff connection. Today, several new types of connections have been developed, in order to improve the structural properties of the connection, its durability and its aesthetic. They are usually made with steel (prone to corrosion) or wood. At the same time, the various connections used in raw bamboo constructions present several drawbacks, including one or more between non-standardisation, difficulty to assemble, not high enough reliability, impossibility to remove them, complicated manufacture and so forth.

Generally speaking, the use of raw bamboo as a structural element outside the Asian continent, Africa and Latin America (where it originates) induces several complexities, including lack of skilled workers, the lack of knowledge about this material and particularly, in view of the above limitations, the lack of a user-friendly and robust connection system to ease the mounting/demounting of bamboo-based structures.

## Summary of invention

In order to address and overcome at least some of the above-mentioned drawbacks of the prior art solutions, the present inventors developed a connection device particularly adapted for raw bamboo constructions, having improved features and capabilities. Of course, the present invention is not limited to applications in the field of bamboo constructions and its principle may be applied in other type of constructions, using other materials than bamboo.

The purpose of the present invention is therefore that of providing a connection device that overcomes or at least reduces the above-summarized limitations affecting known solutions according to the prior art.

In particular, a first purpose of the present invention is that of providing a compliant clipping mechanism easy to assemble and disassemble, adapted to light, temporary structures as well as more solid ones.

A further purpose of the present invention is that of providing a connection system possibly made with sustainable materials and with a sustainable production process.

Still a further purpose of the present invention is that of providing a connection system adapted to the irregularities of bamboo culms and their mechanics, which is standardisable, strong and reliable, easy to manufacture and low cost, as well as able to take up loads in compression or tension, shear or bending moment.

All those aims and other have been accomplished with the present invention, as described herein and in the appended claims.

In view of the above-summarized drawbacks and/or problems affecting the current solutions, in embodiments of the present invention there is provided a clip connector device according to claim 1.

In particular, in some embodiments, a clip connection device according to the present disclosure comprises:

a) a base located at a first end of the device, said base having a first surface and an opposed second surface;
b) at least a pair of face-to-face branches, each branch stemming from the first surface of said base; and
c) a blocking button located at the extremity of each branch, defining an opposed second end of the device

wherein each branch is directed outwardly with respect to the centre of the base so to be elastically pre-tensioned. For instance, each branch can be pre-bent or pre-curved so to be elastically tensioned.

Other embodiments of the present invention relate to an assembly comprising a clip connector device according to the present disclosure and a structural element. The structural element may be a tubular element, such as, but not limited thereto, a bamboo culm, comprising at least a pair of opposed bores configured to mate with the blocking buttons of the clip connector device. Additionally or alternatively, the said structural element may be one comprising a plurality of recesses configured to mate with a plurality of posts located on a surface of the base of the clip connector device.

Other embodiments of the present invention relate to the use of a clip connector device or of an assembly according to the invention for the manufacture of an article of manufacture, such as demountable bikes, bamboo bikes, scaffoldings, fences, games for children, bamboo tents, trusses for construction structures, shadow devices, verandas and/or furniture, as non-limiting examples.

Further embodiments of the present invention are defined by the appended claims.

The above and other objects, embodiments, features and advantages of the herein presented subject-matter will become more apparent from a study of the following description with reference to the attached figures showing some preferred aspects of said subject-matter.

In embodiments the invention concerns A clip connector device comprising: a) a base located at a first end of the device, said base having a first surface and a second surface; b) at least a pair of face-to-face branches, each branch in a pair stemming from the first surface of said base; and c) a blocking button located at the extremity of each branch, defining an opposed second end of the device and wherein each branch in a pair is directed outwardly one with respect to the other so to be elastically pre-tensioned.

In embodiments the blocking buttons are preferably devoid of any tapered surface.

In embodiments at least one blocking button may comprise an anti-de-plugging element.

In embodiments the connector device may comprise a pin spanning from the first surface of the base through the second surface of the base.

In embodiments the clip connector device may comprise at least a second pair of face-to-face branches, each branch in said additional pair stemming from the second surface of the base.

In embodiments the clip connector device may comprise a further pair of face-to-face branches, each branch stemming from a lateral portion of the base.

In embodiments the clip connector device may comprise a plurality of posts defining a toothed pattern on a surface of the base.

In embodiments the clip connector may comprise a further pair of face-to-face branches stemming from a further base comprising further posts, the base and the further being connected together via an assembly of said posts with said further posts.

In embodiments the invention concerns an assembly comprising a clip connector device as defined herein and a structural element.

In embodiments the structural element may comprise a plurality of recesses configured to mate with a plurality of posts of the clip connector device.

In embodiments the structural element is a tubular element comprising at least a pair of opposed bores configured to mate with the blocking buttons of the clip connector device.

In embodiments the invention concerns the use of a clip connector device or of an assembly as defined herein for the manufacture of an article.

In embodiments the article comprises one of demountable bikes, bamboo bikes, scaffoldings, fences, games for children, bamboo tents, trusses for construction structures, shadow devices, verandas and furniture

**Brief description of drawings**

Fig. 1 schematically depicts an isometric view of the connection clip device according to one embodiment of the invention;
Fig. 2 schematically depicts a longitudinal cross-section view of the connection clip device according to the embodiment depicted in Fig. 1, wherein the device further comprises a base having a toothed pattern for mechanical connection to a structural element;
Fig. 3 schematically depicts an isometric view of the connection clip device according to the embodiment depicted in Fig. 2, further comprising an anti-de-plugging element traversing the top blocking buttons via thru holes or bores;
Fig. 4 schematically depicts a longitudinal cross-section view of the connection clip device according to the embodiment depicted in Fig. 3 inserted into a structural element, in the depicted case a bamboo culm, into an assembly;

Fig. 5 schematically depicts an isometric view of the connection clip device according to another embodiment of the invention, the clip having two pairs of face-to-face branches stemming from one base;

Fig. 6 schematically depicts an isometric view of the connection clip device according to the embodiment depicted in Fig. 5, the device being connected as an assembly to a first structural element and about to be connected with a second structural element, in the depicted case both structural elements being bamboo culms;

Fig. 7 schematically depicts a lateral view of the connection clip device according to another embodiment of the invention, the device being a so-called "2D node" having four pairs of face-to-face branches made of clip devices and stemming from different surfaces of a single base;

Fig. 8 schematically depicts an isometric view of the connection clip device according to another embodiment of the invention, the device being a so-called "3D node" in which five devices are interconnected between them through a structural node element into an assembly, three of those devices being inserted into bamboo culms to form assemblies.

## Detailed description of the invention

The subject-matter described in the following will be clarified by means of a description of those aspects and embodiments which are depicted in the drawings in an illustrative and non-limiting manner. It is indeed to be understood that the scope of protection of the invention is not limited to those aspects described in the following and depicted in the drawings. Moreover, it is to be understood that the specific conditions or parameters described and/or shown in the following are not limiting of the scope of protection of the invention, and that the terminology used herein is for the purpose of describing particular aspects by way of example only and is not intended to be limiting either.

Unless otherwise defined, technical and scientific terms used herein have the same meaning as commonly understood by one of ordinary skill in the art to which this invention belongs. Further, unless otherwise required by the context, singular terms shall include pluralities and plural terms shall include the singular. The methods and techniques of the present disclosure are generally performed according to conventional methods well known in the art and as described in various general and more specific references that are cited and discussed throughout the present specification unless otherwise indicated.

Non-limiting aspects of the subject-matter of the present disclosure will be described by way of embodiments and examples with reference to the accompanying figures, which are schematic and are not intended to be drawn to scale. For purposes of clarity, not every component is labelled in every figure, nor is every component of each aspect of the invention shown where illustration is not necessary to allow those of ordinary skill in the art to understand the invention.

As used in the following and in the appended claims, the singular forms "a", "an" and "the" include plural referents unless the context clearly dictates otherwise. Also, the use of "or" means "and/or" unless stated otherwise. Similarly, "comprise", "comprises", "comprising", "include", "includes" and "including" are interchangeable and not intended to be limiting. It is to be further understood that where for the description of various embodiments use is made of the term "comprising", those skilled in the art will understand that in some specific instances, an embodiment can be alternatively described using language "consisting essentially of" or "consisting of."

The design of the clip device of the invention has been conceived and implemented to overcome the previously described limitations of the prior art regarding connection systems, particularly for bamboo constructions without limitation to such constructions. The inventors created, based on the establishment of mathematical models and prototyping for defining the dimensional parameters and to predict the failure mode of the system, a connection device in the form of a clip especially adapted to the irregularities of bamboo culms and their mechanics, standardisable, easy to manufacture, low cost and able to take up loads in compression, tension, shear or bending moment. The following description will mainly refer to constructions using bamboo culm as a non-limiting example, the principles of the present invention being applicable to other construction using tubes similar to bamboo culm as mentioned above.

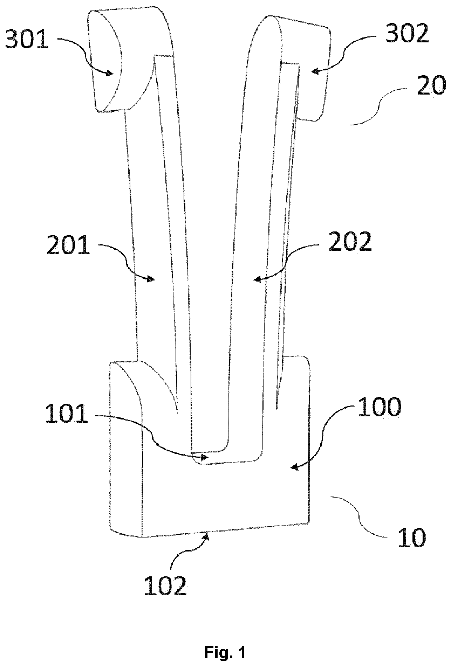

With reference to Fig. 1, a first embodiment of a clip connector device according to the invention is shown. The device features a base **100** located at a first end **10** of the device, said base **100** having a first surface **101** and a second surface **102;** at least a pair of face-to-face branches **201** and **202,** each branch of a pair stemming from the first surface **101** of said base **100;** and a blocking button **301** and **302** located at the extremity of each branch **201** and **202,** defining a second end **20** of the device, wherein each branch **201** and **202** in a pair is directed outwardly one with respect to the other so to be elastically pre-tensioned. For example, in Fig. 1, branches **201** and **202** are slightly bent/curved to this effect.

The design of the clip of the invention is also based, at least in part and in some embodiments, on considerations depending on the very nature of bamboo culms: a relatively flexible structure, with a tubular cross-section, and easy to be drilled to provide thru holes or bores spanning the entire thickness of the bamboo culm. As a way of example, due to the internal structure of a bamboo culm and its mechanical properties, de-plugging of a connection device can be experienced (probably due to the fact that the stiffness of the connection could not be constant -proportional to the stress-). In order to increase the rigidity of the system against de-plugging, the branches **201** and **202** of the connection clip are modelled to induce a pre-stress bending or curvature at rest state, which renders the pre-stressed branches more resistant against de-plugging and grants some tolerance in view of the interior diameter of the bamboo culm (which can be for instance about 0.1 times larger than the distance between the two exterior extremities of the branches, for instance about 2 or 3 mm).

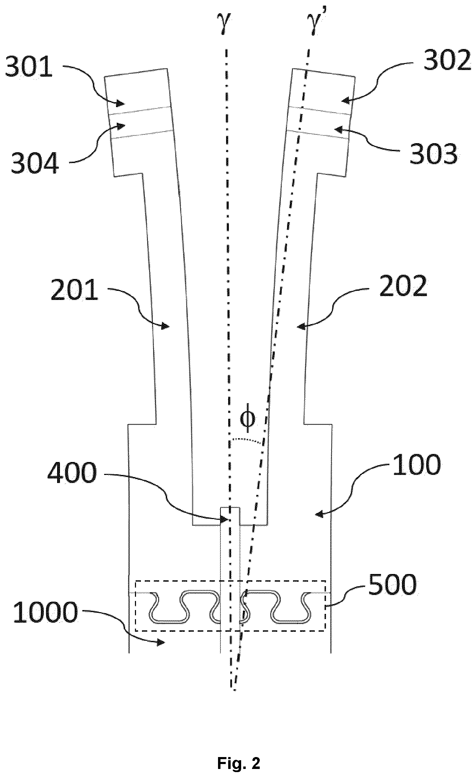

This is further shown in Fig. 2, where a pair of face-to-face branches **201** and **202** stemming from a first surface **101** of a base **100** are directed outwardly one with respect to the other so to be elastically pre-tensioned.

As used herein, the wording "directed outwardly one with respect to the other", when referring to the branches **201** and **202,** is intended as the configuration of a pair of opposing, face-to-face, beam-like branches that experience a divergence of their respective distal portions (comprising blocking buttons **301** and **302**), vis-a-vis their proximal base portion, away from an imaginary central axis $\gamma$ located between the branches **201** and **202.** This can be easily visualized with reference to a symmetry axis $\gamma$ passing through the base **100** and parallel to a plane longitudinally cutting the device (Fig. 2). At rest state, an axis $\gamma'$ running along the length of a branch **201, 202** intercepts the axis $\gamma$ so to define a bending angle $\phi$, due to the bending or curvature of the branch, or to the relative position of the branches **201, 202**. The bending angle $\phi$ will depend on several factors, including the manufacturing material used for the clip, the thickness and the section of the bamboo culm (or other structural element), the size of the buttons **301, 302** and the like, and it is typically comprised between 3 and 20°, such as between 3 and 10°, for instance 6°. These are only examples and other values are possible depending on circumstances, applications and embodiment. As for the branches **201, 202,** these have typically a length which is chosen to be between 2 and 3 times the exterior diameter of the structural element (e.g. a bamboo culm) to be connected with, usually comprised between 5 and 20 cm and a beam-like shape to better accommodate the tubular structure inside the bamboo culm or other structural element. Also in this case, the used material for the clip manufacturing and/or the shape/size of the bamboo culm have an influence on size and/or shape of the branches. Again, these are non-limiting examples and other values may be envisaged depending on the applications and materials used (see the applications listed above).

For instance, when the connection is plugged-in in the culm, the top of the branches **201, 202** must be bent to be able to pass through the inner tubular section of the culm. The minimum distance of displacement of the top of the branches **201, 202** is equal to the sum of the thickness of the bamboo culm and the distance due to the pre-stress curvature. The induced tension in the branches should not be too large to avoid failure of the clip. Accordingly, branches **201, 202** are typically designed and manufactured to preferably have a flexural rigidity comprised between 1 and 10 GPa·m⁴, such as between 2 and 6 GPa·m⁴. Other values are of course possible depending on the circumstances or applications. The expression "flexural rigidity" refers to the force couple required to bend a non-rigid structure in one unit of curvature or it can be defined as the resistance offered by a structure while undergoing bending. In a beam or rod, flexural rigidity (defined as EI) follows the local deflection equation for beams in curvilinear coordinates, also known as the equation of Euler-Bernoulli:

$$1/\rho = M/EI$$

where the curvature is $1/p = d\theta/ds.$ The relationship between bending moment and beam deformation therefore reads as

$$EI \frac{d\theta}{ds} = M(s)$$

Which in Cartesian coordinates for large deflections and an initially horizontal beam can be written as

$$\frac{\mathrm{d}\theta}{\mathrm{d}s} = \frac{\dfrac{\mathrm{d}^2 y}{\mathrm{d}x^2}}{\left[1 + \left(\dfrac{\mathrm{d}y}{\mathrm{d}x}\right)^2\right]^{3/2}} = \frac{M(x)}{EI}$$

where $E$ is the Young's modulus (in Pa), $I$ is the second moment of area (in m⁴), $y$ is the transverse displacement of the beam at $x$, and $M(x)$ is the force couple at $x$. Flexural rigidity has SI units of Pa·m⁴ (which also equals N·m²).

The loads are transferred from the bamboo culm to the branches **201, 202** mostly through the buttons **301, 302**. These buttons are in some embodiments circular, to avoid stress concentrations both in the connection and in the bamboo culm (in which the holes will indeed also be circular). Importantly, in the most preferred embodiments, the blocking buttons **301, 302** are devoid of any tapered surface. Blunt edge surfaces of the blocking buttons allow a more stable and robust connection with a bamboo culm, while at the same time guaranteeing a more uniform forces distribution. The size and the shape of the blocking buttons **301, 302,** as well of any other element and component of the connection clip according to the invention, may be chosen depending on the needs and circumstances, without departing from the general inventive concept defining the invention.

Regarding the materials for the manufacture of the connection clip device, the choice is not limiting as long as the used materials are rigid enough to withstand stress and compression/tension loads of the desired constructions, and sufficiently elastic for the branches to be bent against the pre-tensioning to be inserted into a bamboo culm (or a tube made of another material), while regaining their shape and positioning once in place into the culm. Suitable "branch materials" can be selected for instance from a non-limiting list comprising wood, various thermoplastics and thermosets having a Young's modulus typically comprised between 2 and 12 GPa, including for instance PET, PLA and ABS. Other portions of the device, e.g. all or part of the base and/or the buttons, may be produced with more rigid, strong and/or though materials including for instance metals or polymeric materials having a Young's modulus higher than 12 GPa, depending on the needs and circumstances, such as fiber-reinforced PLA polymers.

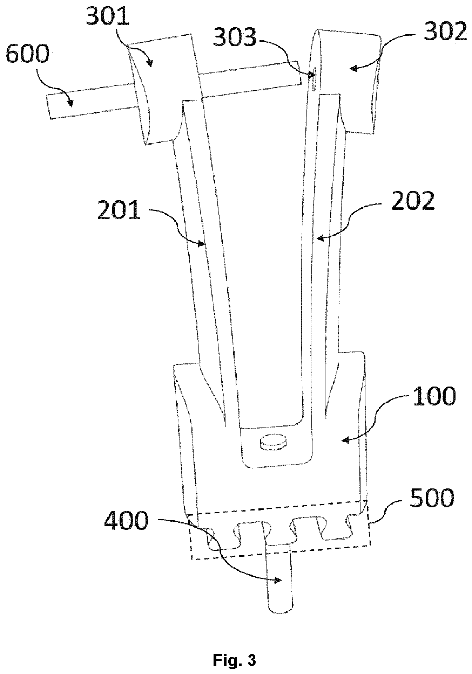

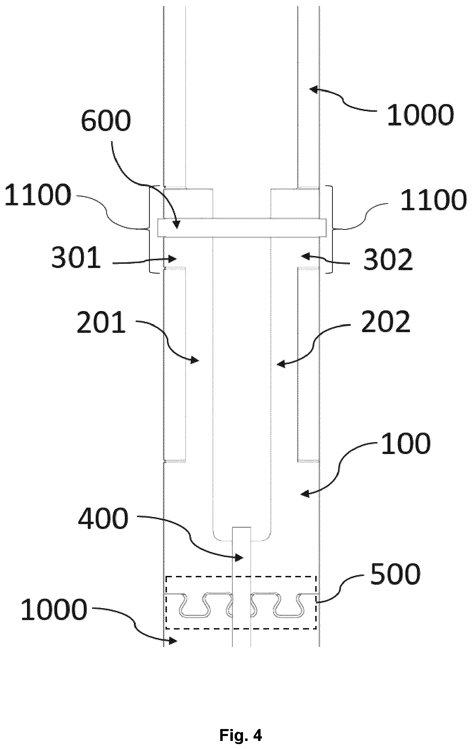

Interestingly, the branches **201, 202** will not only be submitted to tension. In fact, there is a bending moment which will appear in the branches, because of the eccentricity of the application of the tension load from the culm to each branch. The main consequence of that bending is that, if the displacement of the buttons **301, 302** at the top of the connection is too large, it may cause de-plugging-in of the connection, and therefore failure of the system. As it has been demonstrated with real world, implemented prototypes, de-plugging-in of the connection would generally be the most probable mode of failure. Accordingly, besides optimizing the various parameters of the connection clip, in embodiments of the invention the connector device further features, on at least one blocking button **301, 302,** an anti-de-plugging element **600** (see Figs. 3 and 4) could be added to prevent the branches to bend towards the interior of the culm in case of tension loading. The anti-de-plugging element **600** can be embodied as an elongated element, such e.g. a steel screw, configured to pass through ad hoc bores **303, 304** crafted in the blocking buttons **301, 302.** The anti-de-plugging element **600** can be added once the connection is plugged in the culm or structural element **1000,** by passing it through a top button (e.g. **301**) of one branch, then turn it to fix its position (Fig. 4).

In one embodiment, the clip connector device according to the invention further comprises a pine **400** spanning from the first surface **101** of the base **100** through the second surface **102** of the base **100** to avoid sliding of the connection device once in place into a bamboo culm or structural element **1000** (see Figs. 3 and 4).

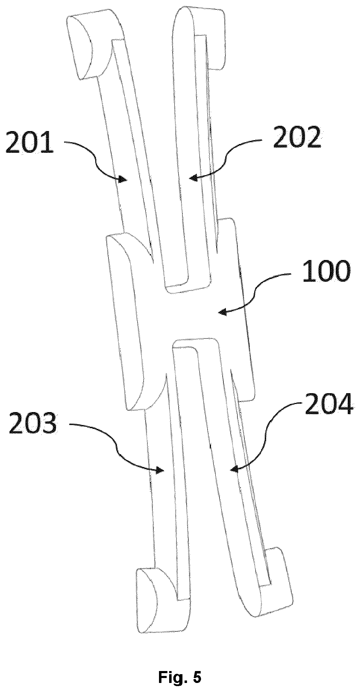

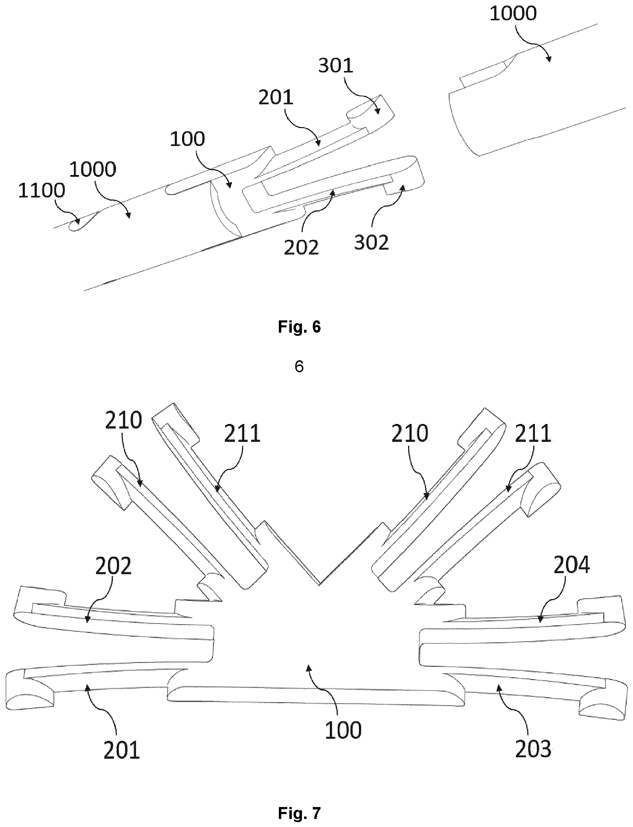

A simple connection by itself can be used to attach a bamboo culm or structural element **1000** to a plank for instance. Except for this latter, applications are very limited for a simple connection. Therefore, a natural development of the concept has been for the inventors to design 2D "nodes" made of multiple simple connections. To this aim, two approaches have been undertaken, namely adding further branch pairs to a base **100** and physically connecting several clip connector devices. Of course, other approaches may be followed. Accordingly, the clip connector device of the invention has been further improved to fulfil these requirements and modified, depending on the needs, to comprise in some embodiments an additional pair of face-to-face branches **203, 204,** each branch in said additional pair stemming from the second surface **102** of the base **100.** A schematic configuration of this embodiment is shown in Figs. 5 and 6, for example for connecting two culms or structural element **1000.** In another embodiment, schematically shown in Fig. 7, the clip connector device of the invention comprises one or more additional pair(s) of face-to-face branches **210, 211,** each branch stemming from a lateral portion of the base **100.** This embodiment allows the plugging of several structural elements **1000,** for example four in the configuration of Fig. 7. Of course, this is only an example and the construction of Fig. 7 may be adapted to allow the connection of less structural elements **1000** or more structural elements **1000.** The disposition of the branches may not be identical to the one illustrated in Fig. 7 and the angles separating each pair of branches may be different.

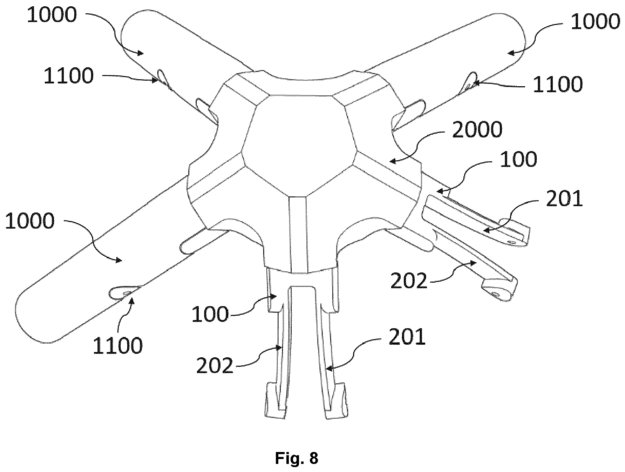

Alternatively or additionally, in a further embodiment, the clip connector device of the invention may comprise a plurality of posts **500** defining a toothed pattern on a surface of the base, as shown for instance in Figs. 2 to 4. The toothed pattern advantageously permits to connect clip connector devices between them and/or with a structural element **1000** without having to use glue, thereby reducing costs, facilitating the connections (especially for 3D nodes) and improving resistance at the nodes interface. For example, a toothed pattern 500 could be used to form the connector device of Fig. 5 from two individual connector devices as illustrated in Fig.1, or the configuration of Figs. 7 or 8 using a plurality of connector device of Fig. 1 attached to the base 100/2000. This is particularly useful for 3D-printed connection clips, where 3D printed objects are made of a superposition of printing layers, and therefore the resistance of the printed object is way higher in the direction of printing. Advantageously, an additional structural element **2000,** as depicted for instance in Fig. 8, can be added as a node interface to mechanically couple the various devices between them to even better distribute the coupling forces of the interconnected clip devices and assemblies.

Another embodiment of the present invention relates to an assembly comprising:

- a clip connector device according to the present disclosure and
- a structural element **1000** (see Figs. 4, 6 and 8).

In one embodiment, the structural element **1000** comprises a plurality of recesses configured to mate with a plurality of posts **500** of the clip connector device. This design and configuration is particularly advantageous for connecting a connector device to a structural element **1000** that cannot be modified to include thru holes or bores, such as a base fixed to the floor. Additionally or alternatively, the structural element **1000** is a tubular element, like a bamboo culm, comprising at least a pair of opposed bores **1100** configured to mate with the blocking buttons **301, 302** of the clip connector device once they are assembled. Combinations of these two embodiments can course be envisaged, as it will be evident to a skilled person. The posts 500 may also be used to form the connector device of figure 5, using two connector devices according to figure 2. The posts 500 are therefore used to attached both devices together rather than one connector device to a structural element. The posts 500 may be used in other embodiments of the present invention, for example to form the constructions as illustrated in figures 7 or 8.

As it will be apparent, still another object of the present invention relates to the use of a clip connector device or of an assembly according to the present disclosure for the fabrication of an article of manufacture. Said article of manufacture may be for instance one of demountable bikes, bamboo bikes, scaffoldings, fences, games for children, bamboo tents, trusses for construction structures, shadow devices, verandas and furniture, to cite a few non-limiting examples.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention is not limited to the described embodiments, and be given the broadest reasonable interpretation in accordance with the language of the appended claims.

Exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined not solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein, the scope of the present invention is not so limited. Moreover, while this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations.

**Claims**

1. A clip connector device comprising:

   a) a base (100) located at a first end (10) of the device, said base having a first surface (101) and a second surface (102);
   b) at least a pair of face-to-face branches (201,202), each branch in a pair stemming from the first surface (101) of said base (100); and
   c) a blocking button (301,302) located at the extremity of each branch (201,202), defining an opposed second end (20) of the device

   wherein each branch (201,202) in a pair is directed outwardly one with respect to the other so to be elastically pre-tensioned.

2. The clip connector device of claim 1, wherein the blocking buttons (301,302) are devoid of any tapered surface.

3. The clip connector device of claims 1 or 2, wherein at least one blocking button (301,302) comprises an anti-de-plugging element (600).

4. The clip connector device of any one of the preceding claims, further comprising a pin (400) spanning from the first surface (101) of the base through the second surface (102) of the base.

5. The clip connector device of any one of the preceding claims, further comprising at least a second pair of face-to-face branches (203,204), each branch in said additional pair stemming from the second surface (102) of the base.

6. The clip connector device of any one of the preceding claims, further comprising a further pair of face-to-face branches (210,211), each branch stemming from a lateral portion of the base (100).

7. The clip connector device of any one of the preceding claims, further comprising a plurality of posts (500) defining a toothed pattern on a surface of the base (100).

8. The clip connector according to the preceding claim, further comprising a further pair of face-to-face branches stemming from a further base comprising further posts, the base and the further being connected together via an assembly of said posts with said further posts.

9. An assembly comprising:

- a clip connector device according to any one of claims 1 to 7 and
- a structural element (1000).

10. The assembly according to claim 8, wherein said structural element (1000) comprises a plurality of recesses configured to mate with a plurality of posts (500) of the clip connector device.

11. The assembly according to claim 8, wherein said structural element (1000) is a tubular element comprising at least a pair of opposed bores configured to mate with the blocking buttons of the clip connector device.

12. The use of a clip connector device according to any one of claims 1 to 7, or of an assembly according to any one of claims 8 to 10, for the manufacture of an article.

13. The use according to claim 11, wherein said article comprises one of demountable bikes, bamboo bikes, scaffoldings, fences, games for children, bamboo tents, trusses for construction structures, shadow devices, verandas and furniture.

**Fig. 1**

**Fig. 2**

**Fig. 3**

**Fig. 4**

**Fig. 5**

**Fig. 6**

6

**Fig. 7**

**Fig. 8**

Europäisches
Patentamt

European
Patent Office

Office européen
des brevets

# EUROPEAN SEARCH REPORT

Application Number

EP 21 15 4434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/015606 A1 (KURANI HEMANT CHANDRAKANT [US]) 18 January 2018 (2018-01-18) * Figures 11a,13b; Paragraphs 122-131,134-135 * | 1-13 | INV. F16B2/22 F16B7/04 F16B9/00 E04B1/26 |
| X | US 4 247 216 A (PANSINI ANDREW L) 27 January 1981 (1981-01-27) * Figures 1-4; Claims 1,2; Column 1, line 34 - Column 2, line 34 * | 1-13 | |
| X | WO 2009/072219 A1 (WAIKEIWAI INC [JP]; YAMAMOTO HEIHACHIRO [JP] ET AL.) 11 June 2009 (2009-06-11) * Figures 1-3; Claims 1-5 * | 1-13 | |
| A | GB 2 575 276 A (BRITANNIA ENGINEERING ISLE OF MAN LTD) 8 January 2020 (2020-01-08) * Figure 18; Page 14, line 18 * | 3 | |
| A | CN 211 116 984 U (ZHEJIANG INA INTELLIGENT TECH CO LTD) 28 July 2020 (2020-07-28) * Figures 1,2; Abstract * | 7,8,10 | TECHNICAL FIELDS SEARCHED (IPC) F16B E04B |

The present search report has been drawn up for all claims

| Place of search | Date of completion of the search | Examiner |
|---|---|---|
| Munich | 15 June 2021 | Garmendia, Ion |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 4434

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2021

| Patent document cited in search report | | Publication date | Patent family member(s) | | Publication date |
|---|---|---|---|---|---|
| US 2018015606 | A1 | 18-01-2018 | US 2018015606 A1<br>WO 2018013498 A2 | | 18-01-2018<br>18-01-2018 |
| US 4247216 | A | 27-01-1981 | NONE | | |
| WO 2009072219 | A1 | 11-06-2009 | NONE | | |
| GB 2575276 | A | 08-01-2020 | AU 2019297617 A1<br>CA 3104415 A1<br>EP 3818214 A1<br>GB 2575276 A<br>WO 2020008166 A1 | | 07-01-2021<br>09-01-2020<br>12-05-2021<br>08-01-2020<br>09-01-2020 |
| CN 211116984 | U | 28-07-2020 | NONE | | |

EPO FORM P0459

For more details about this annex : see Official Journal of the European Patent Office, No. 12/82